# EUROPEAN PATENT APPLICATION

(11) **EP 4 803 164 A1**
(43) Date of publication of application: **09.09.2026**
(21) Application number: 24909501.9
(22) Date of filing: 14.05.2024
(51) Int. Cl.: A63C 11/00, A63C 5/00, A63C 5/06, H02K 7/02, H02S 40/00, A43B 7/02, A63B 69/18, G08B 21/02

(54) **POWER GENERATION DEVICE AND METHOD, AND COMMUNICATION SYSTEM**

(30) Priority: 27.12.2023 US 202363615261 P
(71) Applicant: Wang, Tiejun, Beijing 100048 (CN)
(72) Inventor: WANG, Yuexin, Beijing 100048 (CN); WANG, Tiejun, Beijing 100048 (CN); YANG, Chengshuang, Shenzhen, Guangdong 518023 (CN); WONG, Anne, Plano, Texas 75024 (US); WANG, Ximing, Beijing 100048 (CN)
(74) Representative: Wittmann, Ernst-Ulrich
(86) International application number: PCT/CN2024/093220
(87) International publication number: WO 2025/138534

(57) **Abstract**

The invention discloses a power generation device, method, and communication system that incorporate multimode communication, AI technology, and security monitoring.

The invention generates a continuous supply of electrical energy through an alternative power generation approach, thereby avoiding the impact of environmental factors on battery performance and ensuring a stable power supply.

## Description

### CROSS-REFERENCE TO RELATED APPLICATIONS

This application claims priority to U.S. Provisional Patent Application No. 63/615,261, filed on December 27, 2023; PCT Application No. PCT/CN2022/116928, filed on September 3, 2022; PCT Application No. PCT/US2019/042729, filed on July 22, 2019; and U.S. Provisional Patent Application No. 62/605,191, filed on July 22, 2019, all of which are incorporated herein by reference in their entireties.

### TECHNICAL FIELD

The present invention relates to power generation devices, AI technology, communication systems, and related technologies. The present invention is described below using skiing as an illustrative embodiment.

### BACKGROUND

Skiing and snowboarding are winter sports involving gliding on snow using skis or snowboards. Skiing may be performed on flat terrain, slopes, or specialized ski areas. Skiers typically wear ski boots, which may be secured to the skis to better control gliding direction and speed. Skiing activities may include several types, such as Alpine Skiing (performed on steep slopes, typically requiring a ski lift to reach the summit, followed by descending along marked trails); Cross-country Skiing (performed on relatively flat terrain, which may be natural terrain or man-made ski trails); Freestyle Skiing (performed on specially designed courses, including jumps, flips, and other acrobatic maneuvers); Snowboarding (similar to skiing, but using a single board instead of two skis, with different movements and techniques); Ski Jumping (jumping from a ramp, traveling through the air before landing); and Biathlon (combining cross-country skiing and shooting, where athletes perform shooting competitions during skiing). Skiing is not only a competitive sport but also a popular recreational activity. It exercises the body, improves balance and coordination, and serves as an excellent way to enjoy winter scenery and experience excitement.

Intelligent wearable devices are a class of intelligent terminals integrating sensors, wireless communication, multimedia, and other technologies. They may be worn directly on the human body and achieve intelligent information interaction through built-in sensors and integrated chips. Representative intelligent wearable devices include AR/VR/MR head-mounted devices (providing immersive visual experiences through augmented reality (AR), virtual reality (VR), or mixed reality (MR) technologies); audio-enabled intelligent glasses (combining audio playback functionality with fashionable design, allowing users to listen to music or perform voice communication functions without obstructing vision); Bluetooth earphones (wirelessly connected earphones that may also feature health monitoring functions in addition to voice communication and music playback); smart watches (offering various functions beyond time display, such as health monitoring, message notifications, and call answering); health monitoring devices (such as heart rate monitors and sleep trackers, used to record and analyze user health status); and children's smart watches (specifically designed for children, typically featuring positioning, voice communication, and emergency assistance functions). As products of the mobile internet era, intelligent wearable devices are gradually becoming an indispensable part of people's lives. They not only enhance convenience in daily life but also gradually change people's health habits and communication methods. With continuous technological advancement, future intelligent wearable devices will become more intelligent and personalized, providing users with richer experiences. As the market develops, the forms of intelligent wearable devices will become more diverse, including but not limited to smart watches, intelligent glasses, intelligent footwear, intelligent clothing, and the like. These products will meet the personalized needs and usage scenarios of different users. The present invention relates to intelligent wearable technologies applied to skiing environments.

Design requirements for intelligent features on ski equipment are relatively stringent. The temperature and weather conditions during skiing may vary depending on geographic location and season. In some high-altitude regions or during winter, temperatures may fall below freezing, and severe weather such as high winds and blizzards may occur. Under such conditions, skiers need to wear heavy ski suits and goggles to protect themselves from cold and snow. However, heat generated by the feet may be insufficient to compensate for heat dissipation, making the feet prone to coldness when wearing ski boots.

In low-temperature environments, the battery efficiency of intelligent devices may decrease. This is because, under cold conditions, the chemical reaction rate inside the battery slows down, resulting in reduced battery discharge capability. This may cause the battery power of intelligent devices to drain faster, or in extreme cases, even if the battery has sufficient charge, the device may shut down due to inability to receive sufficient power.

Liquid crystal displays may experience slow response issues at low temperatures. This is because the fluidity of liquid crystal materials deteriorates at low temperatures, affecting the switching speed of pixels, thereby causing problems with touchscreen functionality or display updates.

Some intelligent devices, such as mobile phones, may experience malfunctions in cold environments due to material embrittlement or reduced effectiveness of lubricants in the screen or other components. This may render the mobile phone unable to function properly, potentially causing automatic shutdown. Accordingly, use of mobile phones in skiing environments may be inconvenient.

Furthermore, desirable skiing locations are often situated in remote or mountainous areas where communication coverage may be limited or unavailable due to mountainous terrain, obstacles, and non-line-of-sight environments. In addition, skiing environments are often large and sparsely populated, and skiing activities inherently involve certain safety risks.

Accordingly, innovation in existing technologies is desirable.

### SUMMARY OF THE INVENTION

In view of the above-described deficiencies of the prior art, an object of the present invention is to provide intelligent ski equipment, a self-powered ski, a power generation device, an action guidance method, a personal safety system, a comfort enhancement system, a positioning and sensing system, a human-machine interaction method, and a communication system.

To solve the above technical problems, the present invention adopts the following technical solutions.

The present invention provides an intelligent self-powered ski equipment, comprising a ski body, wherein at least one power generation component is disposed on the ski body and is rotatably connected thereto. The power generation component comprises a windward fan blade, a flywheel, and a generator. The windward fan blade is connected to the flywheel, and the flywheel is connected to the generator. The windward fan blade is disposed at a front end of the flywheel and the generator. A center of gravity of the power generation component is biased toward a side of a connection between the power generation component and the ski body opposite the windward fan blade, such that the windward fan blade is automatically oriented toward an airflow direction during skiing. The windward fan blade rotates under aerodynamic resistance during skiing, thereby driving the flywheel to rotate, and the flywheel drives the generator to generate electrical energy.

Further, the windward fan blade is connected to the flywheel via an internal ratchet and a pawl, wherein the pawl and the internal ratchet are configured to provide unidirectional transmission.

Further, on a windward side, a diameter of the windward fan blade is greater than a diameter of the flywheel and/or the generator.

Further, the windward fan blade is a turbine fan.

Further, the power generation component comprises a front power generation component disposed at a front end of the ski body and a rear power generation component disposed at a rear end of the ski body.

Further, on a windward side, a diameter of the windward fan blade of the rear power generation component is greater than a diameter of the windward fan blade of the front power generation component.

Further, the power generation component is rotatably connected to the ski body via a rotating shaft, allowing lateral rotational movement.

Further, the power generation component is ball-jointed to the ski body.

Further, the power generation component comprises a housing, and the windward fan blade, the flywheel, and the generator are disposed within the housing. An air-collecting channel is formed within the housing, and the windward fan blade is disposed within the air-collecting channel.

Further, two windward fan blades are provided and are respectively disposed at a front end and a rear end of the air-collecting channel, and two flywheels are respectively connected to the two windward fan blades.

Further, a solar panel is disposed on the ski body and is configured to convert solar energy into electrical energy during skiing.

Further, an energy storage component is disposed on the ski body and is electrically connected to the power generation component, wherein the energy storage component stores electrical energy generated by the power generation component, and is further electrically connected to the solar panel to store electrical energy generated thereby.

Further, a heating component is disposed on the ski body at a position corresponding to a ski boot, wherein the heating component is electrically connected to the energy storage component, and electrical energy generated by the power generation component is supplied to the heating component to provide warmth to the ski boot.

Further, a temperature control component is electrically connected to the heating component.

Further, a temperature sensing component is electrically connected to the heating component.

Further, the heating component comprises a PTC heater composed of a plurality of independent PTC plates, enabling controlled heating under operation of the temperature control component.

Further, the temperature control component comprises an online detection module and an offline detection module. The online detection module is configured to measure voltage and current of the PTC heater during a heating process and determine a temperature based on a calculated resistance value. The offline detection module is configured to measure a resistance of the PTC heater via a resistance measurement circuit and determine a temperature based on the measured resistance value.

Further, a target temperature of the temperature control component is a fixed value or is calculated based on temperature control logic.

Further, the temperature control logic comprises obtaining meteorological parameters of an environment in which the ski equipment is located, including temperature, wind speed, wind direction, and air pressure, and determining a target temperature of the heating component based on the meteorological parameters and a preset temperature determination algorithm. Alternatively, the temperature control logic comprises implementing, at a server side, the temperature control logic of the offline detection module via the online detection module, and adjusting the target temperature based on a temperature preference of a skier.

The present invention further provides a power generation device for use in ski equipment. The power generation device comprises: a pressure-based power generation component configured to harvest electrical energy from pressure applied during skiing; and a charging circuit configured to supply the harvested electrical energy to one or more power-consuming components, wherein the pressure-based power generation component is electrically connected to the charging circuit. The pressure applied to the pressure-based power generation component results from normal skiing motions performed by a skier and from impact forces from a ski slope during skiing, including pressure applied by the skier's soles and by a front lower portion of the skier's calves. The electrical energy is generated without requiring any intentional power-generating action by the skier; the skier need only perform normal skiing movements while electrical energy is generated from the skiing movements.

Furthermore, the pressure-based power generation component comprises an enclosure fixed to the ski equipment and configured to surround a ski boot, wherein the ski boot is disposed within the enclosure and supported by the ski equipment. At least one pressure-based power generation element is disposed on the ski equipment beneath the ski boot, and at least one pressure-based power generation element is disposed on an inner side of the enclosure corresponding to a tongue portion of the ski boot. The ski boot comprises at least one pressing member disposed at a bottom portion thereof and at a tongue portion thereof, each pressing member being configured to apply pressure to a corresponding one of the pressure-based power generation elements. In one embodiment, the ski boot is configured to be movable relative to the enclosure in a vertical direction such that pressure generated during skiing is transmitted to the pressure-based power generation elements. Electrical energy generated by the pressure-based power generation component is supplied via the charging circuit and used for warming the ski boot.

Further, in one embodiment, in the power generation device applied to intelligent ski equipment, the pressure-based power generation element comprises a metal dome, a ceramic piece, and a copper piece sequentially stacked from top to bottom, wherein the metal dome corresponds in position to the pressing member in a vertical direction, and the ceramic piece and the copper piece are respectively connected to the charging circuit so as to form a circuit with the power supply component.

Further, in one embodiment, in the power generation device applied to intelligent ski equipment, a sliding rail is provided on an inner side wall of the enclosure, the sliding rail being configured to slidably engage with a catch provided on an outer side of the ski.

Further, in the power generation device applied to intelligent ski equipment, a compression spring is disposed within the sliding rail, one end of the compression spring being fixed to the sliding rail, and the other end being fixed to the catch.

Further, in the power generation device applied to intelligent ski equipment, four sliding rails may be provided, respectively located on inner side walls at left and right sides of two ends of the enclosure.

Further, in the power generation device applied to intelligent ski equipment, the sliding rail can be arranged in a non-vertical orientation.

Further, in one embodiment, in the power generation device applied to intelligent ski equipment, taking a midpoint of the sliding rail as a center, an upper end of the sliding rail is located in a second quadrant, and a lower end of the sliding rail is located in a third quadrant.

Further, in the power generation device applied to intelligent ski equipment, a gap is provided between the inner side wall of the enclosure and the ski boot.

Further, in the power generation device applied to intelligent ski equipment, a sealing member is provided between an upper end of the enclosure and the ski boot, and the sealing member is a flexible sealing member.

Further, in one embodiment, the pressing member comprises a pressing body and a pressing head configured to contact the pressure-based power generation element, and the pressing head is connected to the pressing body via an elastic member.

Further, a power generation device is connected to a side of the pressing body.

Further, a rack is provided on a side of the pressing body, and the power generation device comprises a transmission gear set, a drive shaft, a generator, a first flywheel, and a second flywheel. A first bevel gear and a second bevel gear are respectively provided at two ends of the drive shaft. The rack meshes with the first bevel gear, and the second bevel gear meshes with the transmission gear set. The transmission gear set meshes with an outer gear of the first flywheel. An inner side of the first flywheel is provided with ratchet teeth, and the second flywheel is provided with a pawl. The second flywheel is located on the inner side of the first flywheel. The second flywheel is fixed to a rotating shaft of the generator, and the pawl engages with the ratchet teeth.

Further, the transmission gear set comprises a first gear, a second gear, and a third gear. The first gear is provided with a third bevel gear, the second gear is provided with a first driven pinion, and the third gear is provided with a second driven pinion. The second bevel gear meshes with the third bevel gear, the first gear meshes with the first driven pinion, the second gear meshes with the second driven pinion, and the third gear meshes with the second flywheel.

In one embodiment, a piezoelectric device applied to intelligent ski equipment comprises an arcuate pressure-based power generation element. The arcuate pressure-based power generation element comprises a metal substrate, a piezoelectric ceramic, and an insulating tape. The metal substrate is arcuate, the piezoelectric ceramic is disposed on the metal substrate, and the insulating tape is disposed on an edge of the metal substrate.

Further, in the piezoelectric device applied to intelligent ski equipment, a plurality of arcuate pressure-based power generation elements are provided, and the plurality of arcuate pressure-based power generation elements are stacked in layers to form a pressure-based power generation group.

Further, in the piezoelectric device applied to intelligent ski equipment, in one embodiment, four pressure-based power generation groups are provided, arranged in front, rear, left, and right directions, and the four pressure-based power generation groups are connected in series.

Further, in the piezoelectric device applied to intelligent ski equipment, a rigid support member is fixed at a centrally located position on an arcuate outer side of the pressure-based power generation group.

The present invention provides an action guidance method for intelligent ski equipment, comprising:
acquiring skiing-related data of a skier;
inputting the skiing-related data into a pre-trained AI action recognition model, wherein the AI action recognition model outputs a skiing action of the skier based on the skiing-related data; comparing the skiing action with a scene-preset standard action, and guiding the skier according to the scene-preset standard action.

In one embodiment, the skiing-related data comprises:
skiing video data and/or skiing image data captured by a camera device of ski equipment;
ski pole motion data acquired from sensors disposed in the ski devices;
skiing posture data of the skier acquired by posture sensors disposed on the ski equipment.

In one embodiment, inputting the skiing-related data into a pre-trained AI action recognition model, wherein the AI action recognition model outputs a skiing action of the skier based on the skiing-related data, comprises:
recognizing, by the AI action recognition model, a plurality of local postures of the skier based on the skiing-related data;
constructing an overall posture of the skier based on the plurality of local postures;
outputting the skiing action of the skier based on the overall posture.

In one embodiment, the scene-preset standard action is obtained by the following steps: acquiring a target video recording a skiing action;
inputting the target video into a pre-trained deep learning model based on a self-learning mechanism to obtain a standard skiing action represented in the target video.

In one embodiment, before comparing the skiing action with the scene-preset standard action and guiding the skier according to the scene-preset standard action, the method comprises: acquiring slope parameter information associated with a skiing scene;
determining standard actions corresponding to a plurality of slope positions based on the slope parameter information;
determining an optimal posture of the ski equipment based on the slope parameter information and the skiing action of the skier.

An action guidance device for intelligent ski equipment, the device comprising:
a data acquisition module configured to acquire skiing-related data of a skier;
an action recognition module configured to input the skiing-related data into a pre-trained AI action recognition model, wherein the AI action recognition model outputs a skiing action of the skier based on the skiing-related data;
an action guidance module configured to compare the skiing action with a scene-preset standard action and guide the skier according to the scene-preset standard action.

An action guidance system for intelligent ski equipment, the system comprising at least one processor; and a memory communicatively coupled to the at least one processor, wherein the memory stores instructions executable by the at least one processor, the instructions, when executed by the at least one processor, causing the at least one processor to perform the action guidance method for intelligent ski equipment described above.

A non-transitory computer-readable storage medium storing computer-executable instructions, wherein, when the computer-executable instructions are executed by one or more processors, the one or more processors are caused to perform the action guidance method for intelligent ski equipment described above.

The present invention also provides a communication system for intelligent ski equipment, comprising:
An equipment management module is configured to connect to ski equipment of a skier and acquire skiing information data of the skier through the ski equipment, wherein the ski equipment comprises skiing devices and electronic devices.

A safety protection module is used to receive the skiing information data of the skier transmitted by the equipment management module, and to determine whether the skier is safe according to the skiing information data.

In one embodiment, in the communication system for intelligent ski equipment, the equipment management module establishes a connection with the ski equipment in the following manner:
The communication link with the skiing devices serves as a first communication channel, and the communication link with the electronic devices serves as a second communication channel.

The first communication channel and the second communication channel serve as primary and backup channels for each other, and a communication interaction link exists between the electronic devices and the skiing devices.

In one embodiment, in the communication system for intelligent ski equipment, the equipment management module further includes:
A temperature control unit is used to monitor the temperature of the ski equipment and heat the ski equipment such as ski boots, ski suit, gloves, and the like.

In one embodiment, in the communication system for intelligent ski equipment, the safety protection module further comprises:
The multi-mode gateway unit is used to obtain the location information and communication status of the signal source based on the analysis of the received ski information data from the ski equipment.

The beacon timing device unit is used to record the beacon update status of the ski equipment and generate corresponding alarms according to the update status.

In one embodiment, in the communication system for intelligent ski equipment, the safety protection module further comprises:
A communication module unit, wherein the communication module is configured for a relatively short distance communication and a relatively long distance communication, wherein the short distance communication may be used for communication between ski devices and electronic devices, and the long distance communication can be used for communication between ski devices and a multi-mode gateway.

In one embodiment, a ski is utilized as an antenna for low-frequency, long-distance communication. Because the ski has sufficient length and ample space to accommodate a long antenna, low-frequency diffraction capability is enhanced, thereby extending communication range over longer distance. In some embodiments, multiple ski equipment devices may communicate with each other through a mesh ad hoc network to provide communication in uncovered areas.

In one embodiment, in the communication system for intelligent ski equipment, the safety protection module further comprises:
A multi-mode positioning unit is configured to connect to ski devices of a skier through a multi-mode gateway to obtain positioning information of the skier.

In one embodiment, in the communication system for intelligent ski devices, the safety protection module further comprises:
An abnormality alarm unit, used to determine whether the skier has an abnormality according to the skier's positioning information and communication status;

The safety protection unit is used to determine the skier's position, issue an early warning and implement protective measures when it is judged that the skier has an abnormality.

In one embodiment, the communication system for intelligent ski devices comprises a sensor group for transmitting skiing information data acquired from the ski devices to a device management module.

A non-transitory computer-readable storage medium stores computer-executable instructions. When the computer-executable instructions are executed by one or more processors, the one or more processors can execute the communication system for intelligent ski equipment as described above.

The present invention also provides an intelligent ski equipment comprising one or more of: the self-powered ski as described above, the power generation device as described above, the piezoelectric device as described above, the action guidance device as described above, the action guidance system as described above, or the communication system as described above.Compared with the prior art, the present invention provides intelligent ski devices, a power generation device, an action guidance method, and a communication system. The intelligent ski devices may include the self-powered ski, the power generation device, the piezoelectric device, the action guidance system, and/or the communication system including an elongated antenna structure as described above. The ski body may be provided with a front power generation component and a rear power generation component, thereby maintaining front-rear balance of the ski. The power generation components are configured to adjust a windward orientation in response to a change in a direction of motion of the ski, such that the windward fan blades are oriented toward an oncoming airflow to maximize wind exposure, thereby converting wind energy into electrical energy for self-power generation.

The present invention further utilizes pressure applied from soles of the skier and front lower portions of the skier's lower legs during skiing to repeatedly actuate a pressure-based power generation assembly, such that electrical energy generated by the pressure-based power generation assembly is supplied to power-consuming components via a charging circuit. By generating electrical energy and through an power generation mechanism, the present invention provides a continuous power supply, thereby reducing an impact of the skiing environment on battery performance. Furthermore, the present invention utilizes ski boots or skis as communication terminals to replace mobile phones for wireless signal communications and processing and physiological monitoring in mountainous environments. In addition, the present invention employs an artificial intelligence-based action guidance system to promote correct skiing actions, thereby improving skiing safety.

In addition, unless otherwise defined, the meaning of all technical terms used herein is consistent with that commonly understood by those skilled in the art to which the present invention belongs. If there is any inconsistency, the present specification and its included definitions shall prevail.

### BRIEF DESCRIPTION OF THE DRAWINGS

FIG. 1.1 is a schematic side view of intelligent ski equipment according to the present invention.
FIG. 1.2 is a schematic top view of the intelligent ski equipment according to the present invention.
FIG. 1.3 is a schematic structural diagram of a self-powered ski of the intelligent ski equipment according to the present invention.
FIG. 2 is a first schematic structural diagram of power generation components of the self-powered ski according to the present invention.
FIG. 3 is a second schematic structural diagram of the power generation components of the self-powered ski according to the present invention.
FIG. 4 is a schematic diagram of an internal structure of the power generation components of the self-powered ski according to the present invention.
FIG. 5 is a schematic diagram illustrating cooperation between a flywheel and an internal ratchet of the self-powered ski according to the present invention.
FIG. 6.1 is a schematic diagram of assembly of a power generation device with a ski according to the present invention.
FIG. 6.2 is a schematic diagram illustrating cooperation between a pressing member and a power generation device according to the present invention.
FIG. 7 is a cross-sectional schematic diagram of a power generation device according to the present invention.
FIG. 8 is a further cross-sectional schematic diagram of the power generation device according to the present invention.
FIG. 9 is a schematic structural diagram of an enclosure of the power generation device according to the present invention.
FIG. 10 is a schematic structural diagram of a ski boot of the power generation device according to the present invention.
FIG. 11.1 is a first schematic structural diagram of an arc-shaped pressure-based power generation sheet of a piezoelectric device according to the present invention.
FIG. 11.2 is a second schematic structural diagram of the arc-shaped pressure-based power generation sheet of the piezoelectric device according to the present invention.
FIG. 12 is a schematic structural diagram of a pressure-based power generation group of the piezoelectric device according to the present invention.
FIG. 13 is a schematic structural diagram of the pressure-based power generation group applied to a ski boot according to the present invention.
FIG. 14 is a flowchart of an action guidance method for intelligent ski equipment according to an embodiment of the present invention.
FIG. 15 is a schematic diagram of functional modules of an action guidance device for intelligent ski equipment according to an embodiment of the present invention.
FIG. 16 is a schematic diagram of a hardware structure of an action guidance system for intelligent ski equipment according to an embodiment of the present invention.
FIG. 17 is a schematic diagram of a framework of a physiological monitoring watch in a communication system for intelligent ski equipment according to an embodiment of the present invention.
FIG. 18 is a schematic diagram of multi-mode positioning in a communication system for intelligent ski equipment according to an embodiment of the present invention.
FIG. 19 is a flowchart of abnormal alarm processing in a communication system for intelligent ski equipment according to an embodiment of the present invention.
FIG. 20 is a schematic diagram of a logical framework of a safety protection module of a communication system for intelligent ski equipment according to an embodiment of the present invention.
FIG. 21 is a schematic diagram illustrating a ski equipment including ski boot and ski devices according to an embodiment of the present invention.

### DETAILED DESCRIPTION

The following specific examples are only used to further explain the present invention, but the present invention is not limited to the following specific embodiments or ski activities. Any changes based on these embodiments, as long as they comply with the principle, spirit and scope of the present invention, will fall within the scope of protection of the present invention.

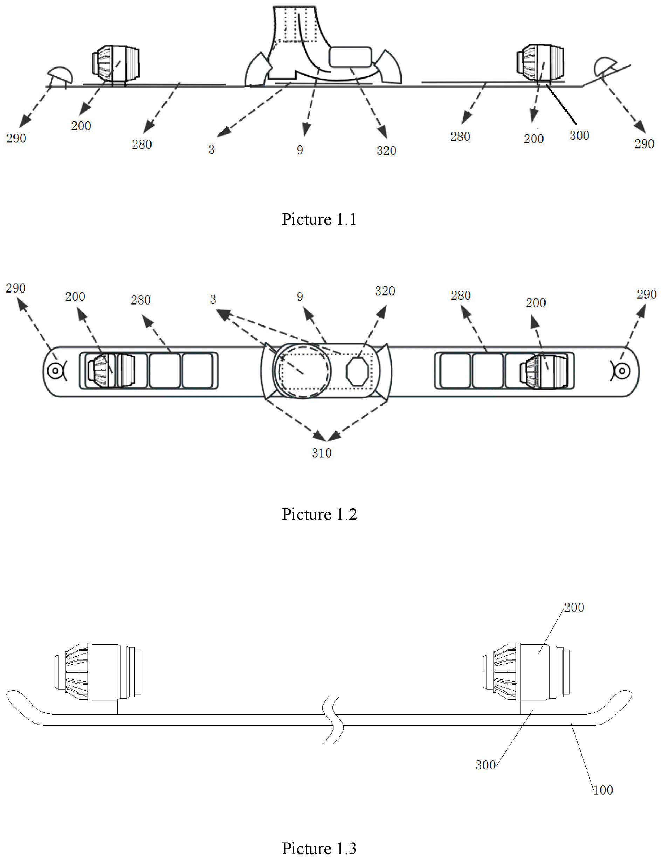

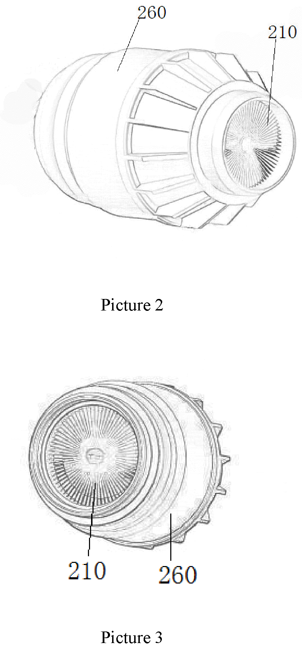

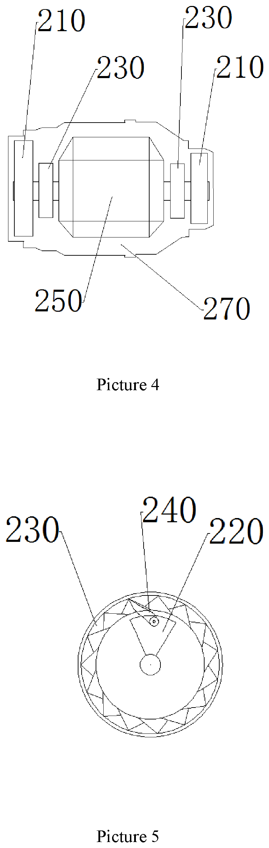

As shown in Figures 1.1-1.3, 2, 3, 4, and 5, the present invention provides a self-powered ski board for intelligent ski equipment, comprising a ski board body 100, wherein the ski board body 100 is provided with at least one power generation component 200, and the power generation component 200 is rotatably connected to the ski board body 100. The power generation component 200 comprises an airflow-driven blade 210, a flywheel 220, and a generator 250, wherein the airflow-driven blade 210 is connected to the flywheel 220, and the flywheel 220 is connected to the generator 250. The airflow-driven blade 210 is disposed at a front end of the flywheel 220 and the generator 250, and a center of gravity of the power generation component 200 is biased toward a side of the connection between the power generation component 200 and the ski board body 100 that is opposite to the airflow-driven blade 210. The airflow-driven blade 210 rotates under wind resistance generated during skiing, thereby driving the flywheel 220 to rotate, and the flywheel 220 in turn drives the generator 250 to operate. In the present invention, one power generation component 200 may be disposed at a front portion and another at a rear portion of the ski board body 100, thereby ensuring front-rear balance of the ski board. The power generation component 200 can adjust its orientation relative to airflow in response to changes in the direction of movement of the ski board or skis, such that the airflow-driven blade 210 consistently faces into the wind to maximize wind capture, thereby converting wind energy into electrical energy for self-power generation. Further, in the self-powered ski board for intelligent ski equipment provided by the present invention, the airflow-driven blade 210 is connected to the flywheel 220 via an inner ratchet 230 and a pawl 240, wherein the pawl 240 and the inner ratchet 230 provide one-way transmission. The flywheel 220 is sector-shaped and may be configured as a single-blade flywheel or as a pair of symmetrically arranged blades. The airflow-driven blade 210 is connected to the inner ratchet 230 via a rotating shaft, and when driven by wind resistance, the airflow-driven blade 210 rotates and drives the inner ratchet 230 to rotate. The flywheel 220 is provided with the pawl 240, which cooperates with the inner ratchet 230, such that the inner ratchet 230 drives the pawl 240 in a unidirectional manner to rotate the flywheel 220. The flywheel 220 is connected to the generator 250 via a rotating shaft, thereby driving the generator 250 to operate, and even when the airflow-driven blade 210 stops rotating, the flywheel 220 continues to rotate under inertia and drive the generator 250, thereby improving power generation efficiency. In addition to being driven by the airflow-driven blade 210, the flywheel 220 may also be driven by inertia generated during user movement, further enhancing power generation efficiency. A binding 310 is disposed at a central portion of the ski board body 100 for securing a ski boot 9, cameras 290 may be disposed at both ends of the ski board body 100 for information acquisition, ski equipment 320 may be integrated with the ski boot 9, the entire ski board body 100 may comprise an antenna structure including an antenna thereby increasing a range of the antenna and facilitating reliable information transmission and reception in ski resorts.

Furthermore, in the self-powered ski board of the intelligent ski equipment provided by the present invention, the diameter of the airflow-driven blade 210 on the windward side is greater than the diameter of the flywheel 220 and/or the generator 250. Generally, the diameter of the airflow-driven blade 210 at the front end is very large, greater than the diameter of the airflow-driven blade 210 at the rear end. Furthermore, in the self-powered ski board of the intelligent ski equipment provided by the present invention, the airflow-driven blade 210 is a turbo fan.

Furthermore, in the self-powered ski board of the intelligent ski equipment provided by the present invention, the power generation components 200 are two, namely, a front power generation component 200 and a rear power generation component 200. The front power generation component 200 is located at the front end of the ski board body 100, and the rear power generation component 200 is located at the rear end of the ski board body 100. This is conducive to maintaining the balance of the ski board during skiing. In particular, the self-powered ski board of the intelligent ski equipment provided by the present invention has the rear power generation component 200 on the windward side. The diameter of the fan blade 210 of the rear power generation component 200 is larger than the diameter of the fan blade 210 of the front power generation component 200. This can increase the amount of wind received by the rear power generation component 200.

Furthermore, in the self-powered ski board of the intelligent ski equipment provided by the present invention, the power generation component 200 is connected to the ski board body 100 so as to be rotatable left and right through the rotating column 300. Furthermore, in the self-powered ski board of the intelligent ski equipment provided by the present invention, in another embodiment, the power generation component 200 is ball-hinged on the ski board body 100, so that more rotation angles can be achieved.

Furthermore, in the self-powered ski board of the intelligent ski equipment provided by the present invention, the power generation component 200 includes a housing 260, and the airflow-driven blades 210, the flywheel 220 and the generator 250 are all arranged in the housing 260. Further, in the self-powered ski board of the intelligent ski equipment provided by the present invention, a wind collecting channel 270 is disposed within the housing 260, and the airflow-driven blades 210 are arranged in the wind collecting channel 270. There are two airflow-driven blades 210, which are respectively arranged at the front end and the rear end of the wind collecting channel 270. There are two flywheels 220, which are respectively connected to the two airflow-driven blades 210, and the generator 250 adopts a dual-output generator 250. The connection structure between the airflow-driven blades 210 at the rear end and the generator 250 is the same as the connection structure of the airflow-driven blades 210 at the front end. The present invention adopts two airflow-driven blades 210, and the front airflow-driven blade 210 has a larger diameter than the rear airflow-driven blade 210. With the wind collecting channel 270, the wind force gathered at the rear end is also enhanced, thereby further increasing power generation efficiency.

Furthermore, the ski board body is provided with a solar panel 280 for converting light energy into electric energy during skiing. Preferably, the solar panel 280 is a flexible thin-film solar panel, which has the advantages of being lighter and being able to bend with the board body without being damaged. Furthermore, the ski board is also provided with an energy storage component, which is electrically connected to the power generation component and stores the electric energy generated by the power generation component; the ski board body is provided with a solar panel for converting light energy into electric energy during skiing, which is electrically connected to the solar panel and stores the electric energy generated by the solar panel.

Furthermore, it also includes a heating component, which is located at the location of the ski boots on the ski body, and the heating component is electrically connected to the energy storage component. The electric energy generated by the power generation component is used by the heating component to provide heat for the ski boots to keep warm or the working environment of the electronic device. Further, it also includes a temperature control component, which is electrically connected to the heating component. Further, it also includes a temperature sensing component, which is electrically connected to the heating component. Further, the heating component is a PTC heater; the PTC heater is composed of a plurality of independent PTC plates, which can be controlled by the temperature control component to heat the ski equipment more intelligently. Further, the temperature control component includes an online detection module and an offline detection module, which are respectively applied to online detection scenarios and offline detection scenarios; wherein the online detection module is used to measure the voltage and current of the PTC heater during the heating process, and then obtain the corresponding temperature value as the measurement temperature according to the calculated resistance value; the offline detection module is used to connect the PTC heater to the resistance measurement circuit to obtain the resistance value after measurement, and obtain the corresponding temperature value as the measurement temperature according to the resistance value. Further, the target temperature of the temperature control component is a fixed value or calculated according to the temperature control logic. Further, the temperature control logic includes: obtaining meteorological parameters of the scene where the ski equipment is located, the meteorological parameters include data such as temperature, wind speed, wind direction, and air pressure, and determining the target temperature of the heating component according to the meteorological parameters and a preset temperature determination algorithm; or, the temperature control logic includes: the online detection module can implement the temperature control logic of the offline detection module on the server side, and can adjust the target temperature according to the temperature preference of the skier.

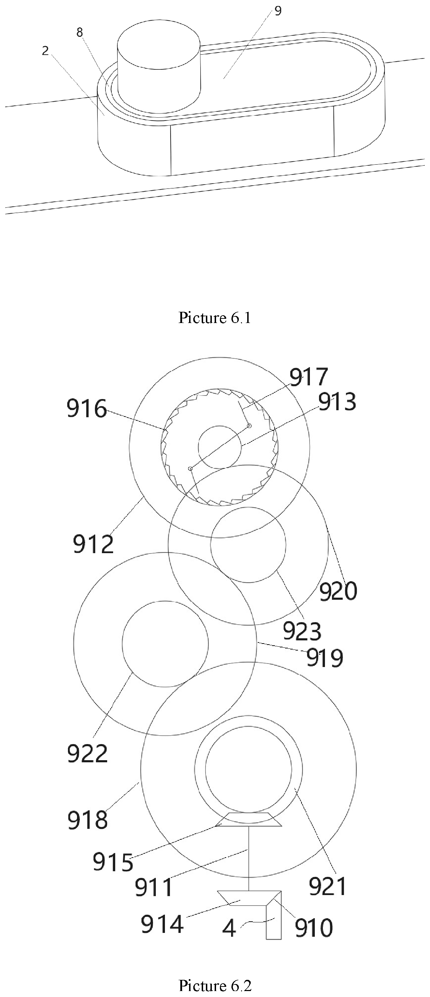

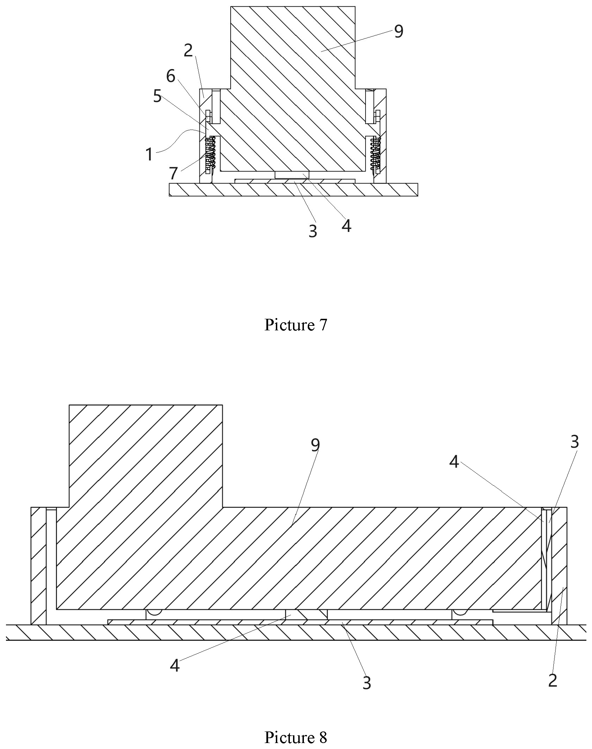

As shown in FIGS. 6.1 and 7, the power generation device for intelligent ski equipment provided by the present invention comprises a pressure-based power generation component 1 configured to generate electrical energy from pressure applied by the skier through soles of the skier's feet and front portions of lower legs during skiing, and a charging circuit configured to deliver electrical energy to electrical components, wherein the pressure-based power generation component 1 is electrically connected to the charging circuit. During skiing, a skier typically performs two primary pressure-applying movements. In a first movement, the skier squats such that downward pressure is transmitted through the thighs, calves, and feet to a bottom portion of the ski boot. In a second movement, the skier leans forward such that forward pressure is transmitted through a front portion of the lower leg to an inner side of a tongue portion of the ski boot. These pressures actuate the pressure-based power generation component 1 to generate electrical energy, which may be supplied to electrical components through the charging circuit. Compared with the prior art, the present application utilizes a skier's body weight during skiing to actuate a pressure-based power generation assembly 1, thereby generating electrical energy. This arrangement eliminates the need for external charging of the ski boot 9 and enables direct power supply to electrical components disposed on the ski boot 9.

In one embodiment, as shown in FIGS. 6.1-6.2, 7, 8, 9, and 10, the ski equipment comprises a ski. The pressure-based power generation assembly 1 comprises an enclosure 2 fixed to the ski. The ski boot 9 mounted on the ski is disposed within the enclosure 2. A pressure-based power generation element 3 is disposed on the ski below the ski boot 9, and another pressure-based power generation element 3 is disposed on an inner side of the enclosure 2 corresponding to a tongue portion of the ski boot 9. Pressing members 4 configured to actuate the pressure-based power generation elements 3 are provided at a sole of the ski boot 9 and at the tongue portion of the ski boot 9. The ski boot 9 may be configured to be vertically slidable relative to the enclosure 2. Electrical energy generated by the pressure-based power generation assembly 1 may be used to provide heating for the ski boot.

It should be noted that a vertical displacement between the ski boot 9 and the enclosure 2 is relatively small, such that during relative vertical movement of the ski boot 9 with respect to the enclosure 2, the pressing members 4 remain in continuous contact with the pressure-based power generation elements 3.

During skiing, a downward force is applied by the skier's foot to the sole of the ski boot 9, and a forward force is applied to an inner side of the tongue portion of the ski boot 9. These forces repeatedly actuate the pressure-based power generation elements 3, thereby causing the pressure-based power generation elements 3 to generate electrical energy.

Further, the pressure-based power generation element 3 comprises a metal dome, a ceramic sheet, and a copper sheet stacked sequentially from top to bottom, wherein the metal dome is vertically aligned with the pressing member 4. The ceramic sheet and the copper sheet are respectively electrically connected to the charging circuit to form a circuit with the power-consuming components.

It should be noted that the structure and operating principle of the pressure-based power generation element 3 are known to those skilled in the art and are not described in further detail herein for brevity.

Further, a slide rail 6 is provided on an inner side wall of the enclosure 2 and is slidably engaged with a catch or an engagement member disposed on an outer side of the ski. Preferably, a compression spring 7 is disposed within the slide rail 6, wherein one end of the compression spring 7 is fixed to the slide rail 6 and another end is fixed to the catch. During skiing, since the pressing member 4 remains in continuous contact with the pressure-based power generation element 3, and under the action of the compression spring 7, a pressing force applied to the sole of the ski boot 9 varies dynamically. The compression spring 7 enables increased fluctuation in the pressing force amplitude, thereby improving power generation efficiency of the pressure-based power generation element 3.

Preferably, four slide rails 6 are provided and are respectively disposed on the inner side walls at both ends of the enclosure 2. Catches are arranged around the ski boot 9 to engage with the slide rails 6, thereby providing multi-directional support. This ensures that, during vertical relative movement between the ski boot 9 and the enclosure 2, the pressing member 4 applies an optimized pressing force to the pressure-based power generation element 3.

Further, the slide rails 6 are arranged in a non-vertical orientation. Preferably, with a midpoint of each slide rail 6 as a reference, an upper end of the slide rail 6 is located in a second quadrant and a lower end is located in a third quadrant.

During forward skiing, a front portion and a sole of the ski boot 9 are subjected to compressive forces from the skier's foot. The non-vertical configuration of the slide rails 6 converts forward-directed compressive forces into pressing forces applied by the pressing member 4 to the pressure-based power generation element 3. This configuration improves energy conversion efficiency while enhancing stability during relative sliding movement between the ski boot 9 and the enclosure 2.

Due to spatial constraints within the ski boot 9, a pressing force applied by a lower front portion of the skier's lower leg to an inner side of a tongue portion exhibits relatively small variation. The slide rails 6 in combination with the compression spring 7 increase a pressing amplitude at a tongue-end pressing member 4, thereby improving power generation efficiency of the pressure-based power generation element 3.

Further, due to the non-vertical configuration of the slide rails 6, a clearance is provided between the ski boot 9 and the enclosure 2 to allow relative sliding movement.

Further, a sealing member 8 is provided between an upper end of the enclosure 2 and the ski boot 9. The sealing member 8 prevents ingress of debris into the clearance, thereby ensuring normal operation of the ski boot 9. Preferably, the sealing member 8 is a flexible sealing member to accommodate relative movement and prevent damage during repeated deformation.

Further, the pressing member 4 comprises a pressing body and a pressing head in contact with the pressure-based power generation element, wherein the pressing head is connected to the pressing body via an elastic member. A power generation device is disposed on a side of the pressing body. As shown in FIG. 6.2, a rack gear 910 is provided on the side of the pressing body. The power generation device comprises a transmission gear set, a transmission shaft 911, a generator, a first flywheel 912, and a second flywheel 913. A first bevel gear 914 and a second bevel gear 915 are respectively disposed at opposite ends of the transmission shaft 911. The rack gear 910 is oriented at approximately 45 degrees relative to the transmission shaft 911 to mesh with the first bevel gear 914. The second bevel gear 915 meshes with the transmission gear set, which meshes with an outer gear of the first flywheel 912. An inner side of the first flywheel 912 is provided with ratchet teeth 916, and the second flywheel 913 is provided with a pawl 917. The second flywheel 913 is disposed within the first flywheel 912. The first flywheel 912 is fixed to a rotating shaft of the generator, while the second flywheel 913 is rotatable relative to the first flywheel 912. When the second flywheel 913 rotates counterclockwise, the pawl 917 engages with the ratchet teeth 916 to drive the first flywheel 912. When the second flywheel 913 stops or rotates clockwise, the pawl disengages, allowing the first flywheel 912 to continue rotating without interference.

Rotation of the first flywheel 912 drives the generator to produce electrical energy. In one implementation, a magnet is disposed on an inner wall of the first flywheel 912 and rotates with the flywheel, while a stationary coil is arranged within the flywheel, such that rotation of the magnet induces electromagnetic induction in the coil to generate electrical energy. Other equivalent electromagnetic generation mechanisms may also be employed.

Further, the transmission gear set comprises a first gear 918, a second gear 919, and a third gear 920. The first gear 918 is provided with a third bevel gear 921, the second gear 919 is provided with a first driven pinion 922, and the third gear 920 is provided with a second driven pinion 923. The second bevel gear 915 meshes with the third bevel gear 921, the first gear 918 meshes with the first driven pinion 922, the second gear 919 meshes with the second driven pinion 923, and the third gear 920 meshes with the second flywheel 913.

Linear motion of the rack gear 910 is converted into rotational motion of the transmission shaft 911, which is transmitted through the gear train to drive the second flywheel 913. Through engagement of the pawl 917 and the ratchet teeth 916, the first flywheel 912 is driven to rotate continuously in a single direction, thereby enabling continuous power generation under repeated actuation of the pressing member 4.

In an alternative embodiment, the first bevel gear 914 may be replaced with a spur gear, and the rack gear 910 correspondingly comprises straight teeth aligned parallel to the transmission shaft 911.

It should be noted that the transmission mechanism allows a relatively small linear displacement of the rack gear 910 to produce multiple rotations of the first flywheel 912. Different gear ratios or multi-stage transmission mechanisms may be employed to optimize generation efficiency, provided that a final driving direction ensures unidirectional rotation of the first flywheel 912. If necessary, engagement directions of the pawl 917 and the ratchet teeth 916 may be reversed to achieve rotation in an opposite direction.

It should be noted that the elastic member disposed between the pressing head and the pressing body enables repeated actuation of the pressing member 4.

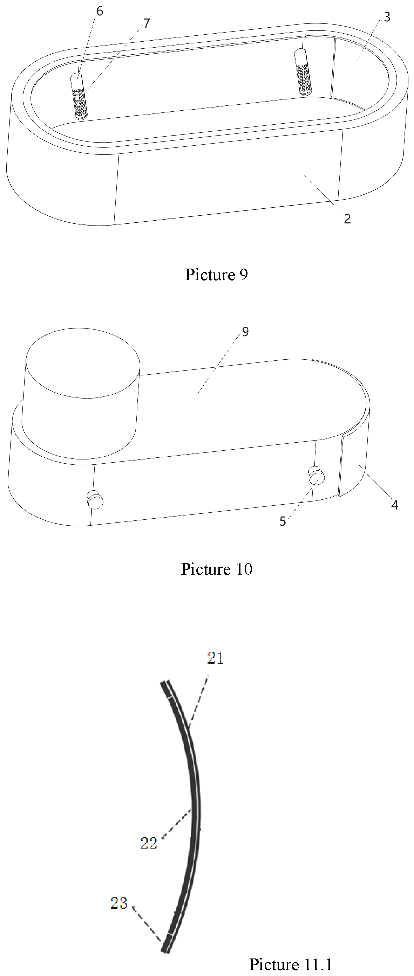

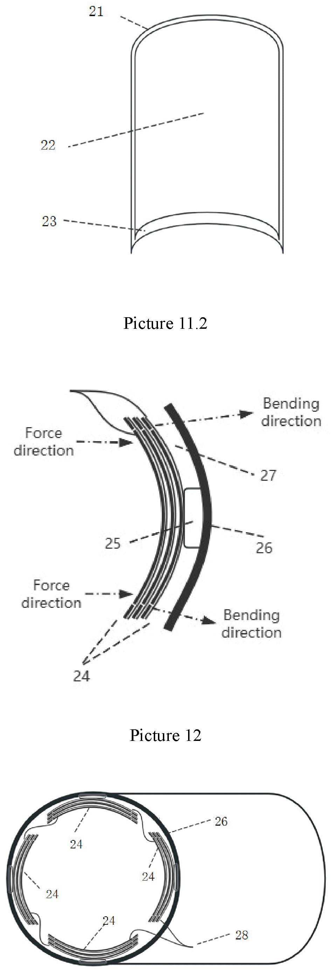

As shown in Figures 11.1, 11.2, 12 and 13, the present invention also provides a power generation device applied to intelligent ski equipment, including an arc-shaped pressure-based power generation sheet, the arc-shaped pressure-based power generation sheet includes a metal substrate 21, a piezoelectric ceramic 22 and an insulating tape 23, the metal substrate 21 is arc-shaped, the piezoelectric ceramic 22 is arranged on the metal substrate 21, and the insulating tape 23 is arranged on the edge of the metal substrate 21.

The metal substrate 21 is used to support the piezoelectric ceramics 22 and the insulating tape 23. The metal substrate 21 is arc-shaped, and the curvature substantially matches the curvature of the inner wall of the ski boots. The metal substrate 21 can elastically deform along the curved direct; the piezoelectric ceramics 22 deform with the metal substrate 21 and generate electrical energy during the deformation; the insulating tape 23 at the edge of the power generation sheet is used to prevent direct contact with the metal substrate 21 when multiple power generation sheets are stacked.

The piezoelectric device applied to the intelligent ski equipment of the present invention comprises a plurality of arc-shaped pressure-based power generation sheets, and the plurality of arc-shaped pressure-based power generation sheets are stacked sequentially to form a pressure-based power generation group.

The piezoelectric ceramic 22 of one arc-shaped pressure power generation sheet is directly connected in contact with the metal substrate 21 of an adjacent arc-shaped pressure power generation sheet, such that multiple power generation sheets form a series circuit. Final output electrodes 28 are electrically connected to the two outermost power generation sheets, and an output voltage of the electrodes is a sum of generated voltages of the multiple arc-shaped pressure power generation sheets. A rigid support member 25 is fixed at a central position on an arc-shaped outer side of the pressure-based power generation group 24, and the rigid support member 25 is fixed to an interior portion of the shoe. A bending clearance 27 is provided between the arc-shaped outer side of the pressure-based power generation group 24 and an upper portion 26 of the shoe. When a skier's leg applies pressure along a force direction on an inner side of the arc shape, the pressure-based power generation group 24 deforms along a bending direction. When the pressure applied by the leg is removed, the pressure-based power generation group 24 returns to its original shape by its own resilience, and the power generation sheets generate electrical energy during both deformation and recovery processes. As another embodiment, an insulating layer is placed between multiple arc-shaped pressure-based power generation sheets, the metal substrates 21 of all the power generation sheets are connected to lead out an electrode, and the piezoelectric ceramics 22 of all the power generation sheets are connected together to lead out another electrode. At this time, the voltage output by the electrode is basically the same as the voltage of a single power generation sheet, but the current is the sum of the currents generated by all the power generation sheets.

Four pressure generating groups 24 are installed on the inner wall of the ski boots in four directions, front, rear, left, and right positions. In this way, no matter in which direction the skier applies pressure to the ski boots, electrical energy can be generated and collected. The electrodes between the pressure generating groups 24 are connected in series through wires, and finally only one electrode outputs. Since the deformation/bending distance of the pressure generating group 24 is very small, it will not affect the skiing action. The pressure-based power generation group 24 generates electrical energy from natural, repeated pressure applied by the skier to the ski boots during skiing actions, without requiring deliberate user actuation or intentional application of pressure to the ski boots. Electrical energy output efficiency may be optimized by adjusting the number of layers and shapes of the multi-layer arc-shaped pressure generation sheets, the toughness of individual generation sheets, and the thicknesses and materials of the piezoelectric ceramics 22.

As another embodiment, output electrodes of multiple pressure-based power generation groups 24 are connected in parallel to output electrodes. As another embodiment, output electrodes of the multiple pressure-based power generation groups 24 are respectively connected in parallel after passing through rectifier circuits. In this configuration, when only a portion of the power generation groups generate electrical energy, other power generation groups that are not generating electrical energy do not consume additional electrical energy. As another embodiment, the same multi-layer power generation sheet configuration may also be disposed between a sole of the ski boot and the ski board.

In order to improve the safety of skiing for users, the present invention also provides an action guidance method for intelligent ski equipment.

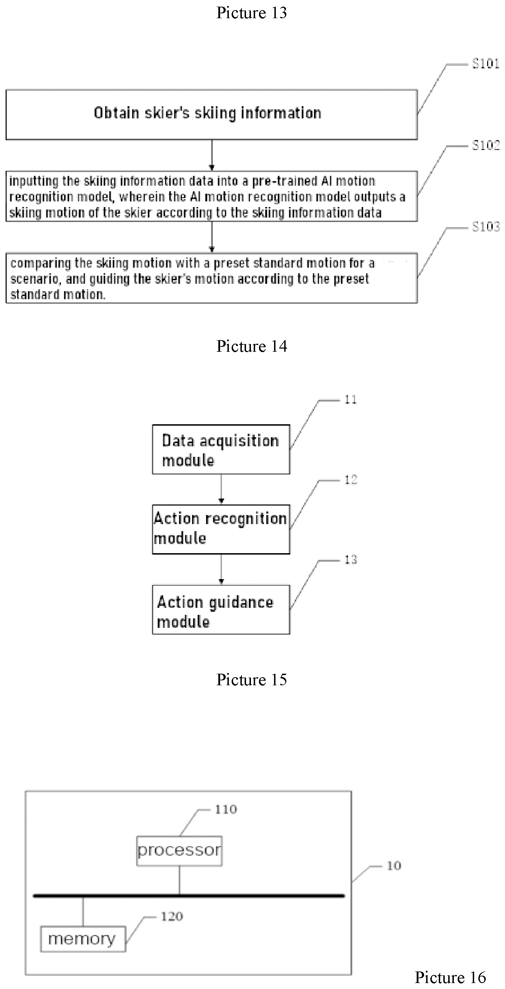

Please refer to Figure 14, which is a flow chart of an embodiment of the action guidance method for intelligent ski equipment provided by the present invention. As shown in Figure 14, the method includes the following steps:
S101, obtaining skiing information data associated with a skier;
S102, inputting the skiing information data into a pre-trained AI action recognition model, and the AI action recognition model outputting the skier's skiing action according to the skiing information data;
S103, comparing the skiing action with the preset standard action for the scene, and guiding the skier's action according to the preset standard action for the scene.

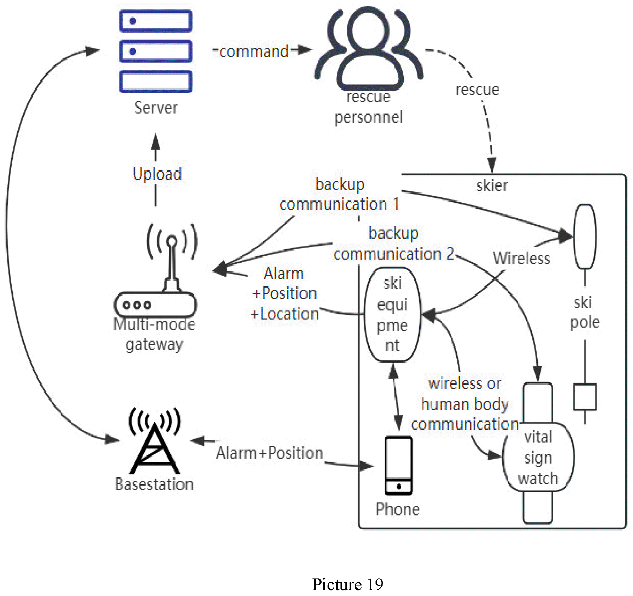

In this embodiment, the skiing information data of the skier is obtained, and the skiing information data is input into a pre-trained AI action recognition model. The AI action recognition model can be obtained after training using various deep learning models such as CNN, RNN, GAN, LSTM, and attention mechanism. The AI action recognition model outputs the skier's skiing action based on the skiing information data, compares the skier's skiing action with the standard action in the scene, and reminds the skier of the action according to the preset standard action of the scene. As shown in FIG. 19, the ski equipment communicates with a ski pole via short-range wireless communication, sensor data are aggregated and sampled for centralized analysis, and action guidance instructions are transmitted to the skier via the ski pole for adjusting a direction of the ski pole for reception of signals. Convenience for guiding the skier's skiing actions is improved.

In another embodiment, the skiing information data includes:
skiing videos and/or skiing images captured by camera equipment on ski equipment;
Ski pole movements acquired through sensors placed on the ski equipment;
The skiing posture of the skier is obtained by the posture sensor installed on the ski equipment.

In this embodiment, the skiing information data comprises skiing videos and/or skiing images of a skier captured by one or more camera devices on skiing devices, ski pole movements detected by sensors disposed on the skiing devices, and a skiing posture of the skier obtained by a posture sensor disposed on the skiing devices.

Further, wide-angle cameras are mounted at the front and rear ends of the ski board and are installed at an upward angle. Due to the large lens angle, the cameras can capture a complete image of the skier, and the two cameras can capture the skier's torso and limbs from different angles. Preferably, depth cameras are used, which are more convenient and provide better recognition performance than installing sensors on the skier's torso and limbs. Depth cameras provide more accurate input data for AI recognition models. The two cameras transmit and aggregate video streams to the ski boot device through short-range high-speed wireless communication. The ski boot device utilizes AI algorithms to process the video data together with posture sensing data to determine the skier's posture and movement information, thereby accurately recognizing skiing actions.

In one embodiment, step S102 comprises:
recognizing, by the AI action recognition model, a plurality of local postures of the skier based on the skiing information data;
constructing an overall posture of the skier based on the plurality of local postures; and outputting the skiing action of the skier based on the overall posture.

In this embodiment, the AI action recognition model recognizes a plurality of local postures of the skier from input skiing information data, constructs an overall posture of the skier from the recognized local postures, and synthesizes the overall posture with input data other than posture parameters to obtain the skier's skiing action. In cooperation with a posture sensor, the AI action recognition model analyzes the skier's skiing posture and action, thereby improving recognition accuracy.

In one embodiment, the scene preset standard action is obtained by the following steps:
Obtain a target video recording skiing movements;
The target video is input into a pre-trained deep learning model based on the self-attention mechanism to obtain the standard skiing movements in the target video.

In this embodiment, the AI action recognition model is constructed based on a self-attention mechanism and is configured to implement skiing action recognition based on the self-attention mechanism. By obtaining a skiing video recording skiing action, the target video is input into a pre-trained deep learning model based on the self-attention mechanism to obtain standard skiing actions of a skier in the skiing video. In the deep learning model based on the self-attention mechanism, a query matrix, a key matrix, and a value matrix are determined through training. A vector matrix extracted from the target video is used as an input, and the vector matrix is respectively multiplied by the query matrix, the key matrix, and the value matrix to obtain corresponding result matrices. An i-th row of the query matrix is multiplied with a corresponding result matrix of an association matrix, and a feature representation is obtained after an activation function is applied and multiplication with the value matrix is performed. Corresponding standard skiing actions of the skier are determined based on the feature representation. The deep learning model is configured to characterize a corresponding relationship between a video recording a skiing process of the skier and standard skiing actions of the skier. The skiing action recognition method based on the self-attention mechanism provides relatively fast detection speed and high recognition accuracy.

In one embodiment, before step S103, the following steps are included:
Obtain the ski trail parameter information of the ski scene;
Determine standard actions corresponding to a number of snow track positions according to the snow track parameter information;
The optimal posture of the ski equipment is determined according to the ski track parameters and the skiing action of the skier.

In this embodiment, the posture solution is based on the fusion of multiple data from the posture sensor. Since a skiing action has different postures, the fuzzy control algorithm can be used to map quantitative posture data to skiing actions to avoid the technical problem of inaccurate recognition caused by the fluctuation of posture data. This action guidance method also includes the determination of standard skiing actions. The standard action determines the standard actions corresponding to several positions according to the snow track parameters, which includes the following two determination methods. One scheme is based on big data technology to obtain the skiing trajectory and posture control corresponding to the fastest speed on the current snow track as the standard action on the snow track. Another scheme is to determine the skiing trajectory based on the snow track parameters, determine the action parameters of each trajectory segment according to the parameters of the skiing trajectory; and determine the standard action based on the feedback of executing the action parameters. And determine the optimal posture of the ski equipment according to the snow track parameters and the skier's control action. For example, the current state parameters and force conditions of the ski equipment are obtained, the expected action of the skier is determined according to the force conditions, and the best front edge angle or Rear edge angle.

Another embodiment of the present invention further provides an action guidance device for intelligent ski equipment, as shown in FIG15, the device includes:
A data acquisition module 11 is used to acquire skiing information data of a skier;
A motion recognition module 12, configured to input the skiing information data into a pre-trained AI motion recognition model, wherein the AI motion recognition model outputs the skiing motion of the skier according to the skiing information data;
The action guidance module 13 is used to compare the skiing action with the preset standard action of the scene, and to guide the skier's action according to the preset standard action of the scene.

The module referred to in the present invention refers to a series of computer program instruction segments that can perform specific functions, which are more suitable for the execution process of the action guidance method for intelligent ski equipment than programs. For the specific implementation methods of each module, please refer to the corresponding method embodiments above, which will not be repeated here.

Another embodiment of the present invention further provides an action guidance system for intelligent ski equipment, as shown in FIG16, the system 10 includes:
One or more processors 110 and memory 120. FIG16 takes one processor 110 as an example for introduction. The processor 110 and the memory 120 may be connected via a bus or other methods. FIG16 takes the connection via a bus as an example.

The processor 110 is used to complete various control logics of the system 10, and can be a general-purpose processor, a digital signal processor (DSP), an application-specific integrated circuit (ASIC), a field programmable gate array (FPGA), a single-chip microcomputer, an ARM (Acorn RISC Machine) or other programmable logic device, a discrete gate or transistor logic, a discrete hardware component, or any combination of these components. In addition, the processor 110 can also be any conventional processor, microprocessor or state machine. The processor 110 can also be implemented as a combination of computing devices, for example, a combination of a DSP and a microprocessor, a plurality of microprocessors, one or more microprocessors combined with a DSP, and/or any other such configuration.

The memory 120 is a non-transitory computer-readable storage medium that can be used to store non-transitory software programs, non-transitory computer executable programs and modules, such as program instructions corresponding to the action guidance method for intelligent ski devices in the embodiment of the present invention. The processor 110 executes various functional applications and data processing of the system 10 by running the non-transitory software programs, instructions and units stored in the memory 120, that is, implementing the action guidance method for intelligent ski devices in the above method embodiment.

The memory 120 may include a program storage area and a data storage area, wherein the program storage area may store an operating system and an application required by at least one function; the data storage area may store data created according to the use of the system 10, and other information. In addition, the memory 120 may include a high-speed random access memory, and may also include a non-transitory memory, such as at least one disk storage device, a flash memory device, or other non-transitory solid-state storage device. In some embodiments, the memory 120 may optionally include a memory remotely arranged relative to the processor 110, and these remote memories may be connected to the system 10 via a network. Examples of the above-mentioned network include, but are not limited to, the Internet, an intranet, a local area network, a mobile communication network, and combinations thereof.

One or more units are stored in the memory 120, and when executed by one or more processors 110, execute the action guidance method in any of the above method embodiments, for example, execute method steps S101 to S103 in Figure 14 described above.

An embodiment of the present invention provides a non-transitory computer-readable storage medium, which stores computer-executable instructions. The computer-executable instructions are executed by one or more processors, for example, to execute steps S101 to S103 of the method in FIG. 14 described above.

As examples, non-transitory storage media can include read-only memory (ROM), programmable ROM (PROM), electrically programmable ROM (EPROM), electrically erasable ROM (EEPROM), or flash memory. Volatile memory can include external cache memory. The RAM may be a random access memory (RAM) of a memory. By way of illustration and not limitation, RAM may be obtained in many forms such as synchronous RAM (SRAM), dynamic RAM, (DRAM), synchronous DRAM (SDRAM), double data rate SDRAM (DDRSDRAM), enhanced SDRAM (ESDRAM), Synchlink DRAM (SLDRAM), and direct Rambus RAM (DRRAM). The disclosed memory components or memories of the operating environment described herein are intended to include one or more of these and/or any other suitable types of memory.

In order to replace a mobile phone to realize communication-related functions, the present invention provides a communication system for intelligent ski devices, comprising:
Through technologies such as eSIM, all functions of the mobile phone can be automatically transferred to the ski devices before the phone stops working, or the transfer can be actively operated manually.

A device management module configured to connect to ski equipment associated with a skier and acquire skiing information data of the skier through ski equipment, wherein the ski equipment comprises ski devices and electronic devices.

A safety protection module is configured to receive the skiing-related data transmitted by the equipment management module and determine a safety status of the skier based on the skiing-related data.

Because it may not be suitable to carry additional equipment during skiing, or it may be inconvenient to use a mobile phone in low-temperature environments, certain functions of a smart phone may be integrated into ski devices, such as an intelligent helmet or an intelligent ski suit. A display screen may be disposed on a front portion of a ski board and/or on a visor of the helmet to satisfy communication requirements during skiing activities. Specifically, eSIM technology or other technical solutions may be used to transfer functions of the mobile phone to ski boot device or other ski devices, allowing the ski devices to display these functions on its own display screen and perform mobile communication functions. Simple operations may be performed through motion-based input, such as tapping the helmet to answer or hang up phone calls, while more complex operations may be performed through voice input.

Based on the demand for VR technology in skiing activities, intelligent ski goggles may support high-definition photography and video recording functions. In addition, one or more positions within a lens of the intelligent ski goggles may display skiing-related data, such as timing information, slope angle, wind direction, wind speed, temperature, skiing speed, weather, terrain information, and the like.

In one embodiment, the equipment management module establishes a connection with the ski equipment in the following manner:
The communication link with the ski devices is a first communication channel, and the communication link with the electronic devices is a second communication channel.

The first communication channel and the second communication channel operate as primary and backup communication channels for each other, and a communication interaction link exists between the electronic devices and the ski devices.

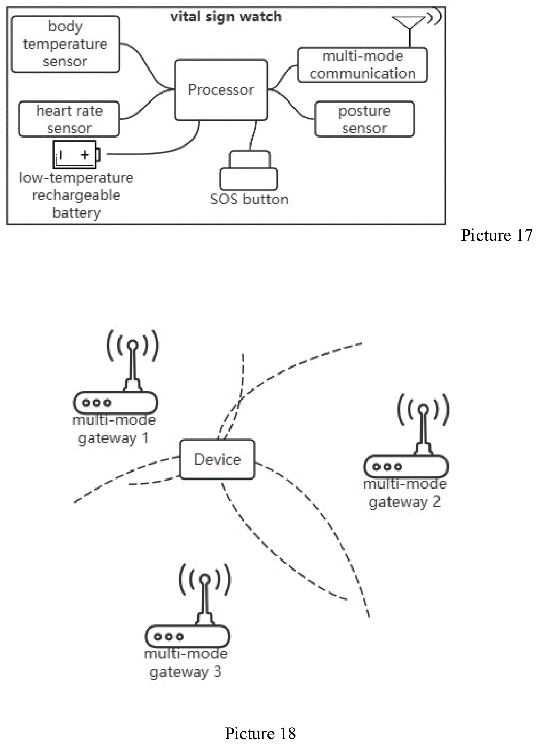

In one embodiment, the communication link between the ski devices and the multi-mode gateway is used as the first communication channel, and the communication link between the electronic devices carried by the skier and the multi-mode gateway is used as the second communication channel. The first communication channel and the second communication channel operate as primary and backup communication channels for each other to reduce the probability of communication interruption. A communication interaction link exists between the electronic devices and the ski devices. As shown in FIG. 17, a vital-sign watch includes multiple built-in sensors. For example, a body-temperature sensor is configured to detect a wearer's body temperature using a contact temperature sensor and/or an infrared temperature sensor at the wrist; a heart-rate sensor is configured to obtain the user's heart rate using a photoplethysmography (PPG) method; and a posture sensor is configured to obtain the wearer's tilt angle, acceleration, angular velocity, movement direction, and the like. The vital-sign watch further comprises a communication module configured to support the above-described primary-backup communication between the electronic devices, body-area communication, and related functions. The vital sign watch further comprises an SOS button configured such that, when a user requires emergency assistance, the user presses the SOS button and the communication module transmits emergency assistance information to the multi-mode gateway.

In some embodiments, an intelligent helmet is further provided, comprising a helmet body and a sensor group mounted on the helmet body, the sensor group being configured for use with intelligent ski equipment. The sensors in the sensor group may be mounted by means of a plurality of mounting holes or mounting slots formed in the helmet body. The helmet body is further provided with connection structures for interfacing with other electronic equipment. For example, the helmet body may include a mechanical mounting structure for mounting intelligent ski goggles and communication contacts configured to establish a communication connection and enable data sharing between the intelligent helmet and the intelligent ski goggles.

Because it may not be suitable to carry additional equipment during skiing, or it may be inconvenient to use a mobile phone in low-temperature environments, certain functions of a smart phone may be integrated into a intelligent helmet or an intelligent ski suit. A display screen may be disposed on a front portion of a ski and/or on a visor of the helmet to support communication during skiing activities. Information associated with the smart phone may be extracted and displayed on the display screen to implement at least a portion of the functions of the smart phone. Simple operations may be performed through motion-based input, such as tapping the helmet to answer or hang up phone calls. More complex operations may be performed through voice input. Based on the demand for VR technology in skiing activities, intelligent ski goggles may support high-definition photography and video recording functions. In addition, one or more positions within a lens of the intelligent ski goggles may display skiing-related data, such as timing information, slope angle, wind direction, wind speed, temperature, skiing speed, weather, terrain information, and the like.

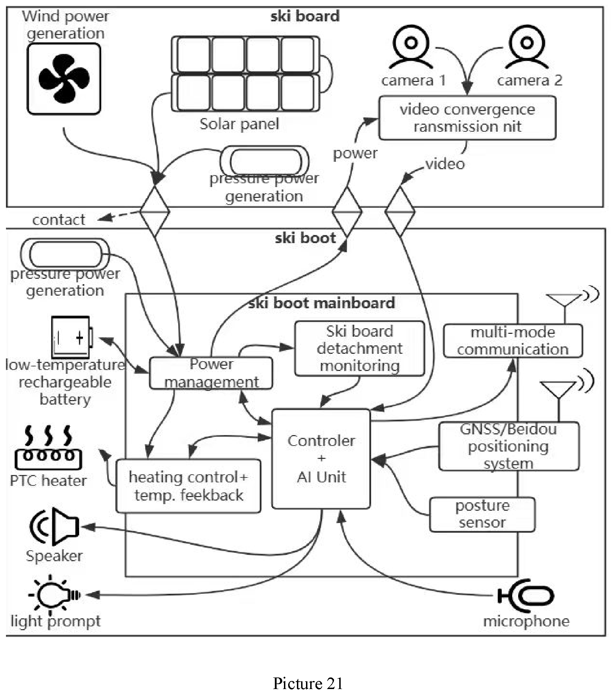

In one embodiment, as shown in FIG 21, the device management module further includes:
A temperature control unit is used to monitor the temperature of the ski equipment and heat the ski equipment.

In this embodiment, the heating system applied to the intelligent ski equipment includes: a power supply component, a temperature control component and a heating unit. The ski equipment includes ski boots, the heating component is arranged on the ski boots and used to heat the ski boots, the power supply component is used to supply power to the heating component, and the temperature control component is used to adjust the power of the heating component to heat the ski boots more intelligently.

Preferably, the power supply component is a low-temperature rechargeable battery; the heating component is preferably a PTC heater; preferably, the PTC heater is composed of a plurality of independent PTC plates, which can be controlled by the temperature control component to heat the ski equipment more intelligently. Among them, the power supply component is preferably a low-temperature rechargeable battery, and further, the power supply component comes from the aforementioned power generation device applied to the intelligent ski equipment; the heating component is preferably a PTC heater.

Preferably, the PTC heater is composed of a plurality of independent PTC plates, which can be controlled by the temperature control component to heat the ski equipment more intelligently; the temperature control component includes an online detection module and an offline detection module, which are respectively used in online detection scenarios and offline detection scenarios. Among them, the online detection module is used to measure the voltage and current of the PTC heater during the heating process, and then obtain the corresponding temperature value as the measurement temperature according to the calculated resistance value. The offline detection module is used to connect the PTC heater to the resistance measurement circuit to obtain the resistance value through measurement, and obtain the corresponding temperature value as the measurement temperature according to the resistance value. The target temperature of the temperature control component can be a fixed value, or it can be calculated according to the temperature control logic.

Preferably, the temperature control logic includes obtaining meteorological parameters of the scene where the ski equipment is located, the meteorological parameters including temperature, wind speed, wind direction, air pressure and other data, and determining the target temperature of the heating component according to the meteorological parameters and a preset temperature determination algorithm. This solves the problem of poor adaptability when using the set target temperature for control and can improve the comfort of skiers.

Preferably, another temperature control logic includes: the online detection module can implement the temperature control logic of the offline detection module on the server side, and can adjust the target temperature according to the temperature preference of the skier. This method integrates big data technology into the temperature control logic of the offline detection module, which is more in line with the skier's comfortable temperature feeling. The system further comprises a contact electrode configured to detect whether a ski and a ski boot are in a connected state. A temperature control component is configured to provide heating control and temperature feedback, wherein a PTC heater is used to convert electrical energy into thermal energy. A heating control and temperature feedback circuit is configured to control the PTC heater to heat the ski boot and to control the heating temperature through closed-loop temperature control. Temperature detection may be achieved by directly measuring a resistance value of the PTC heater at different temperatures. Compared with using a separate temperature sensor, direct measurement provides a larger temperature-correlated area that is closer to the actual temperature and does not require additional wiring, thereby improving system reliability.

Temperature detection is performed using both an online detection method and an offline detection method. Specifically, the online detection method comprises measuring a voltage across the PTC heater and a current flowing through the PTC heater during heating, calculating a resistance value of the PTC heater based on Ohm's law (R = U/I), and determining a corresponding temperature from a temperature-resistance characteristic curve of the PTC heater. Since the online detection method requires powering the PTC heater during measurement, if an actual temperature has already exceeded a target temperature, the measurement may further increase the temperature. In such cases, the offline detection method is used. The offline detection method connects the PTC heater to a resistance measurement circuit to measure resistance. Because the measurement current is small, additional heat generated in the PTC heater is negligible. Typical resistance measurement circuits include a bridge circuit and a four-wire resistance measurement circuit.

The ski boot device further provides functions including ski detachment detection, positioning, and posture sensing, which are implemented by corresponding sensors in a sensor group applied to the intelligent ski equipment. The posture sensor may include one or more of an acceleration sensor, an angular velocity sensor, and an electronic compass, and is configured to detect an inclination angle, acceleration, angular velocity, and movement direction of the ski boot. The inclination angle may be used to analyze dangerous conditions such as falling or being upside down of a user. Left and right ski boot may independently detect motion states and transmit detection results via a wireless communication module, and the aggregated data may be used to determine conditions such as ski detachment or abnormal posture of both feet, and to generate an alarm. The ski boot device is configured to communicate with a ski pole via short-range wireless communication and to collect sensor data collected by the ski pole for centralized analysis. The ski boot device may be connected to a mobile phone via Bluetooth or Wi-Fi and may establish a connection with a server via a mobile phone gateway. The ski boot device and the mobile phone are configured to share positioning information and sensor data. The mobile phone includes a dedicated application configured to collect status data of a skier and to provide connectivity with the server.

In one embodiment, the security protection module further includes:
The multi-mode gateway unit is used to obtain the location information and communication status of the signal source based on the analysis of the received ski information data from ski equipment.

The beacon timing device unit is used to record the beacon update status of the ski equipment and generate corresponding alarms according to the update status.

In this embodiment, a plurality of multi-mode gateways are distributed in ski resorts or mountainous areas. The multi-mode gateway obtains location information and communication status of ski equipment associated with a transmission source based on analysis of received signals. A beacon timing device is disposed in the multi-mode gateway or the server and is configured to record a beacon update status of the ski equipment and to generate a corresponding alarm based on the beacon update status. The multimode gateway is configured to: respond to beacons in short-range and long-range modes; obtain location information of a beacon transmission source according to a beacon in the long-range mode; and parse alarm information and voice information included in the beacon. The beacon timing equipment is configured to: reset a timing duration corresponding to the beacon transmission source after receiving the beacon; and perform a beacon timeout alarm for the beacon transmission source when the timing duration exceeds a preset duration. The received beacon is parsed, and a distance or position of the transmission source is determined according to parsing results.

Beacon timing device uses a heartbeat mechanism to protect skiers. Ski equipment periodically sends short-range communication mode beacons carrying device ID location information. After receiving the beacon, the multi-mode gateway sends a beacon response and sends the beacon content to the server. In addition to the location information carried in the beacon, the server can also roughly determine the location of the ski boot device through the multi-mode gateway that receives the beacon. If the ski equipment does not receive a beacon response, it sends a beacon in the long communication mode. If it still does not receive a response, a warning sound will be issued locally to prompt the skier that the device communication is abnormal and to contact the ski resort service staff for inspection as soon as possible. The server maintains a beacon timer for each ski boot device. Each time a device sends a beacon, the timer is cleared. If the beacon is not received for a long time, it means that the device has failed, or the skier has slid out of the coverage of the multi-mode base station. At this time, the rescue process will also be initiated.

The communication network services that the multi-mode gateway can provide include but are not limited to separate access and management services for different network communications such as satellite links, cellular network links, RFID gateways, LTE core networks, WLAN gateways, and LoRa core networks. The communication network service provides network services that dynamically adjust any communication parameters according to industry requirements and/or physical locations, such as source coding, channel coding, modulation model, signal time slot, transmission power and other physical communication parameters; it can also flexibly schedule and flexibly expand wireless link access and management technology, and can perform functions such as remote control, upgrade, parameter reading/modification, and management of equipment, support link self-healing, and provide high-utilization, strong stability, and easy-to-recover professional wireless network bearer services.

If a dangerous situation occurs, the sensing terminal can automatically adjust the sensing strategy, such as increasing the sampling frequency, increasing the sampling progress, and other sampling strategies. At the same time, it can request the superior device to change the communication parameters and strategies, to obtain higher speed, higher reliability and more suitable transmission in the form of multi-mode communication. Among them, the dynamically adjustable communication parameters include carrier frequency, carrier bandwidth, modulation mode, channel coding, transmission power, receiving sensitivity, and other communication parameters.

The dynamic adjustment method in the communication parameters can be determined according to the data characteristics of the sensor group applied to the intelligent ski equipment. For example: after the perception terminal makes a decision based on the perception data, the perception strategy, communication parameters and/or network transmission rules of the perception terminal can be adjusted according to the decision. Exemplarily, when the decision shows that the specified conditions are met, such as when a dangerous situation occurs, the perception terminal can automatically adjust the communication parameters, such as increasing the sampling frequency, increasing the sampling progress, other sampling parameter adjustment, and can request the superior device to change the communication parameters and communication strategy.

The beacon timing device is set in the server, and the server implements the timing operation and the warning operation after timeout for the beacons received by multiple multi-mode gateways. In another embodiment, the beacon timing device is set in the multi-mode gateway, and the multiple multi-mode gateways are aggregated into a network in an ad hoc manner, and the beacons of the same ski equipment are aggregated or shared in the network. This embodiment reduces the computing requirements of the server. After receiving the alarm, the location of the skier can be roughly determined based on the coverage range of the multi-mode gateway that received the beacon, to notify the rescue personnel to carry out on-site rescue at the corresponding location until the skier is out of danger.

On the server side, the security protection system has its own software architecture, which includes the device layer, data layer, application layer and display layer. The device layer is used to manage the multi-mode gateway and the ski equipment connected to the security protection system; the data layer is used to manage and process the static and dynamic data that are connected; the application layer is used to provide multiple preset applications for users to call to realize various functions; and the display layer is used to display the processing results of the application layer.

For example, the application layer provides a visual display application of the device location. At this time, the display layer can see the location distribution information of each device on the electronic map. At this time, in order to overcome the problem of excessive amount of location data under massive users, it is necessary to perform interpolation simulation on discrete location information. The interpolation simulation method includes determining the curve type and curve curvature of the curve based on the straight-line distance between two adjacent location information and the time interval between the two location information, generating a simulation curve based on the determined curve type and curve curvature, and using the simulation curve as the path between the two location information.

For example, the application layer provides a task allocation algorithm for rescue personnel when an alarm occurs. At this time, the display layer can provide the preferred probability of rescue personnel performing the rescue task. Multiple applications in the application layer can be constructed in a middle platform manner, which provides preset applications such as data aggregation and integration, purification and processing, visualization, and comprehensive application to improve the level of data management. The applications in the application layer include data encryption applications and decryption applications to improve the security of data transmission. The encryption key is determined according to the data label to facilitate the classification and processing of the sensor data. The data label can be a label that has an identification function on the sensor data, such as the sensor ID that generates the data, the data quality evaluation result, and other information. The display layer provides users with personalized choices in the form of menus or option boxes and displays the corresponding data according to the display parameters selected by the user.

In actual scenarios, the server is set up in the cloud, and by collecting multimodal big data from all ski equipment, it is trained and extrapolated by the intelligent computing center to generate an AI model for skiing action guidance, safety tips and parameter analysis, and then sent to users with fixed points, directions, and targets. Since cloud computing has defects such as transmission delay and computing delay, and poor real-time performance, part of the computing tasks can also be completed on the ski equipment to achieve the combination of cloud computing and edge computing. Certain data processing and data fusion can also be performed on the multi-mode gateway side to achieve better data response.

In one embodiment, the security protection module further includes:
A communication module unit, wherein the communication module is equipped with short-distance communication and long-distance communication, wherein the short-distance communication is used for communication among ski equipment and electronic equipment, and the long-distance communication is used for communication between ski devices and a multi-mode gateway.

In this embodiment, in order to adapt to the communication needs in different scenarios, the communication module has two standards: short-distance communication and long-distance communication. Short-distance communication is used for communication among ski devices and electronic devices carried by skiers, such as vital sign or physiological parameter monitoring watches or intelligent wearable devices, and long-distance communication is used for communication between intelligent ski devices and multi-mode gateways. The multi-mode gateway establishes communication channels with both ski devices and electronic devices, and the two can be each other's primary and standby communication channels. When an abnormal situation occurs, if communication between the ski devices and the multi-mode gateway is unobstructed, communication may be performed directly between the ski devices and the multimode gateway. However, if the communication between the ski devices and the multi-mode gateway is blocked (such as being stuck in the snow and unable to communicate), the long-distance communication of the electronic device is enabled to send an alarm message to the multi-mode gateway. Preferably, the primary and standby communication links use different communication standards to achieve more robust communication links.

In some extremely harsh communication environments, the primary and backup communication channels may fail. In this case, as another solution, ski devices and electronic devices can use the human body as a communication medium, that is, human body communication (HBC), through low-frequency (typically 125KHz) signal communication, the physiological monitoring watch and ski equipment each have an electrode in contact with the skin. HBC technology is a short-range communication (also known as near-field communication) method that uses the human body as a digital signal transmission medium.

In one embodiment, the security protection module further includes:
The multimode positioning unit is configured to connect to ski equipment associated with a skier through the multimode gateway to obtain positioning information of the skier.

In this embodiment, the position positioning can adopt Beidou positioning system, or other positioning system, which, on the basis of providing position information, also provides functions such as ski area restriction. The ski equipment is equipped with a snow track map and an electronic fence. When it is detected that the current position of the skier is outside the snow track, an alarm is sent to prevent the skier from deviating from the snow track. In order to further improve the positioning accuracy, RTK differential data technology can also be used. The RTK data can be broadcasted and sent by the multi-mode gateway, and all devices within the coverage range of the multi-mode gateway can receive the broadcasted RTK data. As shown in Figure 18, in the event of an accident, the Beidou satellite may not be able to locate normally because the antenna is blocked, and the skier's position may not be accurately determined. At this time, multi-mode positioning can be used to provide backup positioning. There are more than 3 multi-mode base stations around the device, and the base stations are not in the same straight line. The positioning process is as follows: the device performs ranging operations with 3 multi-mode base stations respectively, and the 3 ranging results and signal strengths are aggregated to the server. The server can determine the approximate position of the skier through the ranging results and the multi-mode gateway position, and use the signal strength to increase the positioning accuracy.

In one embodiment, the security protection module further includes:
An abnormality alarm unit, used to determine whether the skier has an abnormality according to the skier's positioning information and communication status.

The safety protection unit is used to determine the skier's position, issue an early warning and implement protective measures when it is judged that the skier has an abnormality.

In the present embodiment, as shown in FIG. 19, the ski equipment periodically transmits beacon information carrying an identifier (ID) and location information at predetermined intervals (e.g., every 10 seconds), such that the multi-mode gateway may determine a location of the ski equipment. If a skier accidentally leaves a ski trail or becomes trapped in snow, causing communication failure, alarm information and location information may not be transmitted to the multi-mode gateway. When the multi-mode gateway does not receive a beacon transmitted by the ski equipment for more than a predetermined period of time (e.g., 20 seconds), the multi-mode gateway may determine that the skier may be in an abnormal or emergency condition, and rescue personnel may be dispatched to search for the skier near a last known communication location of the ski equipment relative to the multi-mode gateway in combination with the last transmitted location information.

The ski equipment communicates with a ski pole via short-range wireless communication, sensor data acquired by the ski pole are aggregated for centralized analysis. The ski equipment may connect to a mobile phone via Bluetooth or Wi-Fi and may establish a connection with a server via the mobile phone. Location information and sensor data may be shared between the ski boot device and the mobile phone. The mobile phone may include a dedicated application configured to collect status data of the skier and provide communication with the server.

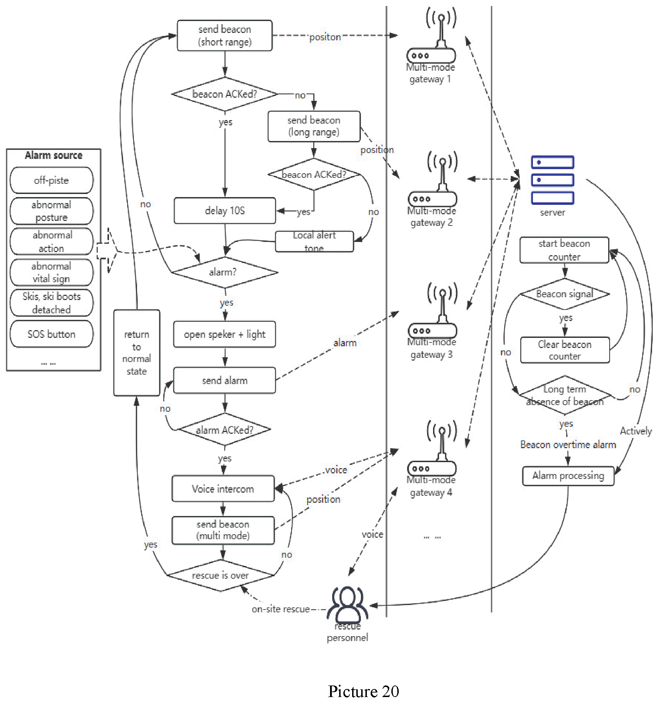

FIG. 20 is a schematic logical framework diagram of the safety protection system provided in the present disclosure. As shown in FIG. 20, alerts generated by the safety protection system may generally originate from three sources, including ski devices, a physiological monitoring device, and beacon timing device.

The ski devices and the physiological monitoring device each collect various status parameters of a skier through respective sensors thereof. When an abnormal physiological condition of the skier is detected, such as abnormally low body temperature, abnormal heart rate, or prolonged inactivity; when an abnormal posture condition is detected, such as falling, overturning, excessive acceleration, or inconsistent postures between both feet; or when abnormal equipment conditions are detected, such as separation between a ski and a ski boot or detachment of a ski boot, alert information is transmitted to a multi-mode gateway through long-distance wireless communication together with current location information. If BeiDou positioning is not activated, positioning is immediately activated, and the location information is subsequently retransmitted to the multi-mode gateway after obtaining the location information. After receiving the alert information, the multi-mode gateway transmits the alert information to a server, and the server dispatches the nearest rescue personnel to the current location of the skier according to the location information of the alerted skier.

Further, when an abnormal posture condition is detected, the ski equipment may initiate an emergency braking measure. For example, a deceleration parachute may be disposed on the ski boot or in a backpack carried by the skier to reduce the skier's speed. Triggering of the emergency braking measure may be determined according to whether the skier's skiing speed exceeds a preset speed threshold, whether the skier moves outside a predefined safety range, and/or whether the skier manually triggers the emergency braking measure, thereby further improving skier safety.

Additional auxiliary components may include a sound input device configured to acquire external sound, such as a microphone; a sound output device configured to output sound information, such as a speaker; and a light indication device configured to output light information, such as a flashlight. Audible alarms and flashing light alarms facilitate rescue personnel in locating the skier, particularly during nighttime conditions.

In one embodiment, the ski devices include a sensor group for acquiring skiing information data of the skier and transmitting it to the equipment management module.

In this embodiment, one or more of the following sensors are included:
a pressure sensor configured to detect a force applied by a skier to ski devices;
a posture sensor configured to detect posture information of the ski devices and, when the ski devices are in use, detect a movement posture of the skier;
a contact sensor configured to detect contact between the skier and the ski devices;
a distance sensor configured to detect relative positions of separable parts of the ski devices;
a body temperature sensor configured to detect body temperature data of the skier;
a heart rate sensor configured to detect heart rate data of the skier;
a position sensor configured to detect a current position of the ski devices;
an angle sensor configured to detect a change in an angle during contact between the skier and the ski devices while skiing;
an image sensor configured to acquire an image during skiing;
a strain sensor configured to acquire a deformation state of the ski devices;
a temperature sensor configured to acquire temperature information of the ski devices;
a speed sensor configured to acquire a linear speed and an angular speed of the ski devices;
a humidity sensor configured to acquire a humidity state inside the ski devices.

When using a sensor group applied to intelligent ski equipment, the sensor data collected by multiple sensors can use data fusion technology to improve the correlation of sensor data, which mainly includes the following methods: when the number of data samples of sensor data is insufficient, the data is expanded by data augmentation. A data augmentation method includes: extracting a feature matrix of an existing data sample, and obtaining a number of basic matrices according to a plurality of feature matrices; determining a plurality of augmentation parameters in the augmentation process by generating a random sequence; obtaining a processed feature matrix after operating the basic matrix based on the plurality of augmentation parameters; and generating an augmented data sample based on the processed feature matrix. In this way, the augmentation operation of the data sample is realized.

The data fusion includes the following steps: extracting the features of some categories of sensor data through the first model, and fusing the extracted features by using techniques such as splicing, segmentation, and encoding. The spliced features are standardized or AI-modified. The data is further identified and processed based on multiple dimensions to improve the fusion effect of sensor data. The fused data features are processed using the attention mechanism. In addition to the sensor data fusion, a study on the reliability and mutual verification of sensor data based on the correlation between sensors is also provided. For example, the health status of the sensor is first identified, which is divided into offline identification and online identification. Offline identification includes when the sensor has calibration failure, power failure, communication failure and other phenomena, then the health status is faulty; online identification includes judging whether the sensor data of the sensor is consistent with the overall situation based on the real-time state parameters of the skiing process and the characteristics of the posture monitoring data, so as to determine whether the sensor is faulty.

The correlation between sensors is determined in the following way. Step 1: According to the spatial distribution information and data type of the sensor group, a spatial coordinate model of each sensor position is established; Step 2: According to whether the detection data exceeds the preset threshold, the first sensor set that exceeds the threshold is determined. Step 3: According to the first sensor set, combined with the correlation distance threshold, the second sensor set is identified; Step 4: The positions of each sensor in the second sensor set are located, and a three-dimensional multi-faceted space is constructed according to the principle of maximizing the spatial volume to obtain an effective sensing area. Each sensor in the effective sensing area can achieve mutual verification and strong spatial correlation.

The present invention also provides intelligent ski equipment comprising the self-powered ski equipment, and/or the power generation device applied to intelligent ski equipment, and/or the piezoelectric device applied to intelligent ski equipment, and/or the action guidance system for intelligent ski equipment, and/or the communication system for intelligent ski equipment. A front power generation component and a rear power generation component may be disposed on a ski board body of the present invention to ensure front-rear balance of the ski board, and each power generation component can change its wind-facing direction as a direction of movement of the ski board changes, such that an airflow-driven blade always faces into the wind to ensure wind capture efficiency, thereby converting wind energy into electrical energy for self-powered operation. The present invention also enables repeated pressing of a pressure-based power generation component through pressure applied from soles of a skier's feet and a front lower portion of the skier's calves, such that electrical energy generated by the pressure-based power generation component can be supplied via a charging circuit to power-consuming components. The present invention provides a continuous supply of electrical energy through separate power generation, thereby reducing or avoiding the impact of a skiing environment on battery performance for power supply. Additionally, the present invention uses ski boots and skis as communication terminals to replace a mobile phone for communication processing and human body monitoring, and further promotes correct skiing movements of a user through AI-based action guidance, which is beneficial for ensuring skiing safety of the user.

In summary, a front power generation component and a rear power generation component may be disposed on the ski board body of the present invention to ensure front-rear balance. Each power generation component can adjust its wind-facing direction in response to changes in the ski board's movement, ensuring that the airflow-driven blade always faces into the wind to maximize wind capture, thereby converting wind energy into electrical energy for self-power generation. The present invention also enables repeated pressing of a pressure-based power generation component via pressure applied by the skier's soles and the front lower portion of the calves, allowing the electrical energy generated by the pressure-based power generation component to be supplied through a charging circuit to power-consuming components. By providing a continuous supply of electrical energy through local power generation, the present invention minimizes the impact of the skiing environment on battery performance. Additionally, the present invention employs ski equipment as communication terminals to replace mobile phones for wireless communication processing and human body monitoring and promotes correct skiing movements through AI-based action guidance, which is beneficial for ensuring the user's skiing safety. Using skiing as an example, the present invention provides intelligent equipment, a power generation device, an action guidance method, and a communication system, wherein the intelligent skiing equipment comprises a self-powered ski board, and/or a power generation device applied to the intelligent skiing equipment, and/or a piezoelectric device applied to the intelligent skiing equipment, and/or an action guidance system for the intelligent skiing equipment, and/or a communication system for the intelligent skiing equipment.

Although the invention has been described with reference to one or more exemplary embodiments, those skilled in the art will understand that the invention is not limited to the precise structures and components described herein, nor is it limited to skiing, and without departing from the spirit and scope of the invention as defined by the appended claims, various modifications, changes, and variations will be apparent from the foregoing description. The present invention is not limited by the illustrated ordering of steps, as some steps may be performed in a different order and/or concurrently with other steps. Various modifications, variations, and changes will be apparent from the foregoing description without departing from the spirit and scope of the invention as defined by the appended claims.

## Claims

1. A device for skiing, comprising a ski board body, **characterized in that** at least one power generation component is disposed on the ski board body, the power generation component being rotatably connected to the ski board body;
the power generation component comprises a airflow-driven blade, a flywheel, and a generator;
the airflow-driven blade is connected to the flywheel, and the flywheel is connected to the generator;
the airflow-driven blade is arranged at a front end of the flywheel and the generator; the center of gravity of the power generation component is biased toward a side of the connection between the power generation component and the ski board body that is away from the airflow-driven blade;
the airflow-driven blade rotates in response to airflow generated during skiing, the airflow-driven blade drives the flywheel to rotate, and the flywheel drives the generator to rotate.

2. The device according to claim 1, **characterized in that** the ski board is further provided with an energy storage component, the energy storage component being electrically connected to the power generation component, and configured to store electrical energy generated by the power generation component;
the ski board body is further provided with a solar panel configured to convert light energy into electrical energy during skiing, the energy storage component being electrically connected to the solar panel and configured to store electrical energy generated by the solar panel.

3. The device according to claim 2, **characterized in that** the device further comprises a heating component located at a position of the ski board body corresponding to where a ski boot is placed, the heating component being electrically connected to the energy storage component, and the electrical energy generated by the power generation component being used by the heating component to keep the ski boot warm.

4. A device applied to skiing, **characterized in that** the device comprises a pressure-based power generation assembly configured to generate electrical energy by receiving pressure from the soles of a skier's feet and the front side of the lower legs during skiing, and a charging circuit configured to supply electrical energy to electrical components, wherein the pressure-based power generation assembly is electrically connected to the charging circuit.

5. A method for skiing, **characterized by** comprising:
acquiring skiing information data of a skier;
inputting the skiing information data into a pre-trained AI motion recognition model,
wherein the AI motion recognition model outputs a skiing motion of the skier according to the skiing information data;
comparing the skiing motion with a preset standard motion for a scenario, and guiding the skier's motion according to the preset standard motion.

6. A device for skiing, **characterized in that** the device comprises:
a data acquisition module configured to acquire skiing information data of a skier;
a motion recognition module configured to input the skiing information data into a pre-trained AI motion recognition model, wherein the AI motion recognition model outputs a skiing motion of the skier according to the skiing information data;
an action guidance module configured to compare the skiing motion with a preset standard motion for a scenario and guide the skier's motion according to the preset standard motion.

7. A system applicable to skiing, **characterized in that** the system comprises at least one processor; and
a memory communicatively connected to the at least one processor;
wherein the memory stores instructions executable by the at least one processor, and
when executed by the at least one processor, the instructions cause the at least one processor to perform the action guidance method for intelligent ski equipment according to claim 5.

8. A communication system, **characterized by** comprising:
a device management module configured to connect ski equipment of a skier and acquire skiing information data of the skier via the ski equipment, wherein the ski equipment comprises skiing devices and electronic devices;
a safety protection module configured to receive the skiing information data transmitted by the device management module and determine whether the skier is safe according to the skiing information data.

9. A non-transitory computer-readable storage medium, **characterized in that** the non-transitory computer-readable storage medium stores computer-executable instructions which, when executed by one or more processors, cause the one or more processors to perform the action guidance method for intelligent ski equipment according to claim 5, and/or cause the one or more processors to perform the communication system for intelligent ski equipment according to claim 8.

10. A ski equipment, **characterized in that** the ski equipment comprises:
the skiing device according to any one of claims 1-3, and/or the power generation device applied to ski equipment according to claim 4, and/or the action guidance device for ski equipment according to claim 6, and/or the action guidance system for ski equipment according to claim 7, and/or the communication system for ski equipment according to claim 8.
